# EUROPEAN PATENT APPLICATION

(11) **EP 4 506 084 A1**
(43) Date of publication of application: **12.02.2025**
(21) Application number: 24190453.1
(22) Date of filing: 23.07.2024
(51) Int. Cl.: B22F 3/17, B22F 3/16, B22F 3/24, B22F 1/052, B22F 1/06, B22F 10/28, B22F 10/64, B33Y 40/20, C22C 1/04

(54) **WROUGHT METALLIC ARTICLE AND METHOD FOR MANUFACTURING THE SAME FROM A METALLIC-POWDER COMPOSITION**

(30) Priority: 09.08.2023 US 202318446615
(71) Applicant: The Boeing Company, Arlington, VA 22202 (US)
(72) Inventor: MANN, Austin E., Arlington, 22202 (US); PECINA, Joseph A., Arlington, 22202 (US); YOUSEFIANI, Ali, Arlington, 22202 (US)
(74) Representative: Howson, Richard Giles Bentham

(57) **Abstract**

A method for manufacturing a wrought metallic article from a metallic-powder composition includes steps of: consolidating the metallic-powder composition to yield a consolidated preform having a cross-sectional area and a relative density of less than 100 percent; reducing the cross-sectional area of the consolidated preform via at least one forming pass of one of a cogging process and a rotary incremental forming process, thereby yielding an intermediate preform ; and reducing the cross-sectional area of the intermediate preform via at least one forming pass of another of the cogging process and the rotary incremental forming process.

## Description

### FIELD

The present application relates generally to the field of metallurgy, and more specifically to a method for manufacturing wrought metallic articles from metallic-powder compositions.

### BACKGROUND

Traditionally, wrought metallic products, including but not limited to plates, bars, billets, and sheets, are manufactured through a process that involves the melting or in some cases, double or triple melting, of cast ingots. The resulting precursor materials are then processed into their final form via a sequence of lengthy, energy-intensive thermo-mechanical conversion processes. These processes may include operations such as rolling and forming. This conventional method of processing large cast ingots requires a significant amount of time, energy, and skilled labor to produce material of a quality that is acceptable for use in demanding industries, such as the aerospace industry.

Powder metallurgy techniques have been introduced as alternatives that can circumvent some of these intensive processing steps, thereby making the production of high-performance metallic materials more affordable. These techniques typically involve the consolidation of loose metal powder into stock shapes, such as bars and plates, or near-net-shape parts or preforms using methods like cold isostatic pressing and sintering or hot isostatic pressing.

However, even with the advantages offered by powder metallurgy, these techniques have their own set of challenges. One significant drawback is the relatively high cost associated with achieving a near fully dense and durable product. This cost factor is driven by the need to eliminate porosity, which can compromise the mechanical properties of the final product. Therefore, while powder metallurgy offers several advantages over traditional ingot-based methods, it also necessitates the development of more efficient and cost-effective methods for producing high-quality, fully dense wrought metallic products from metallic powder compositions.

### SUMMARY

Disclosed are methods for manufacturing a wrought metallic article from a metallic-powder composition.

In one example, the disclosed method for manufacturing a wrought metallic article from a metallic-powder composition includes steps of: consolidating the metallic-powder composition to yield a consolidated preform having a cross-sectional area and a relative density of less than 100 percent; reducing the cross-sectional area of the consolidated preform via at least one forming pass of one of a cogging process and a rotary incremental forming process, thereby yielding an intermediate preform ; and reducing the cross-sectional area of the intermediate preform via at least one forming pass of another of the cogging process and the rotary incremental forming process.

Also disclosed are wrought metallic articles manufactured according to the disclosed methods.

Other examples of the disclosed methods and wrought metallic article manufactured according to the disclosed methods will become apparent from the following detailed description, the accompanying drawings and the appended claims.

### BRIEF DESCRIPTION OF THE DRAWINGS

FIG. 1 is a block diagram of a method, according to one or more examples of the subject matter, disclosed herein, for manufacturing a wrought metallic article from metallic-powder compositions;
FIG. 2 is a block diagram of aircraft production and service methodology; and
FIG. 3 is a schematic illustration of an aircraft.

### DETAILED DESCRIPTION

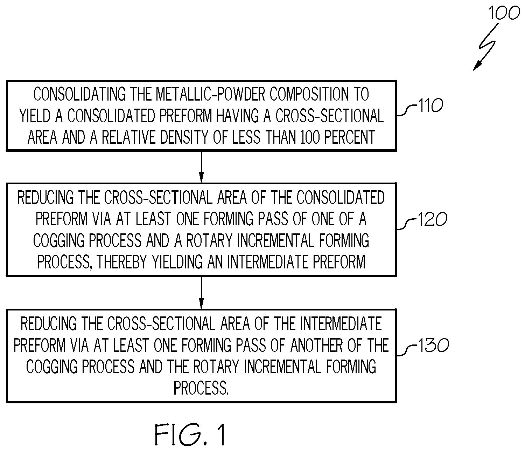

Referring to FIG. 1, the present description relates to a method 100 for manufacturing a wrought metallic article from a metallic-powder composition. The method includes steps of: at block 110, consolidating the metallic-powder composition to yield a consolidated preform having a cross-sectional area and a relative density of less than 100 percent; at block 120, reducing the cross-sectional area of the consolidated preform via at least one forming pass of one of a cogging process and a rotary incremental forming process, thereby yielding an intermediate preform; and at block 130, reducing the cross-sectional area of the intermediate preform via at least one forming pass of another of the cogging process and the rotary incremental forming process. The method may further include additional steps before, after, or intermediate to the defined steps. This could include, for example, additional forging steps or annealing steps before, after, or intermediate to the defined cogging and incremental forming steps.

The relative density of the consolidated preform is a factor that differentiates the present method from traditional methods which start with fully dense preforms. In traditional manufacturing methods, metallic articles are often produced through a series of casting and forging operations. For example, in casting-based methods, metal or an alloy is typically melted and then poured into a mold that defines the shape of the final product. Once the molten metal solidifies in the mold, the cast piece is extracted and often needs to undergo various treatments or secondary processing steps, like hot or cold working, to achieve the desired mechanical properties. The casting process typically results in a fully dense preform. Another conventional method is the powder metallurgy process coupled with hot isostatic pressing. In this process, metallic powders are compacted in a die to form a 'green' compact. This compact then undergoes a sintering process at elevated temperatures to bond the particles together, which increases the compact's strength but still leaves some porosity. To remove this residual porosity and achieve a fully dense product, the sintered compact undergoes a hot isostatic pressing process. In hot isostatic pressing, the compact is subjected to high pressures and temperatures in an inert atmosphere, which makes the compact fully dense. However, this process is costly and time-consuming due to the high temperatures and pressures required. In contrast, the method of the present description begins the forging process with a less-than-fully-dense consolidated preform, alleviating the need for energy- and time-intensive processes to reduce the density. This can make the process more economical and efficient, while still delivering a wrought metallic article with desirable properties.

After the consolidation step of the present description, the relative density of the consolidated preform could vary. The density could be less than 99 percent, or it might be somewhat lower, such as less than 98 percent, less than 97 percent, less than 96 percent, or less than 95 percent. This allows for the production of products from consolidated preforms including substantial amounts of porosity. In other cases, the density could be significantly lower, potentially less than 90 percent, less than 85 percent, less than 80 percent, less than 70 percent, or even less than 60 percent. This allows for the production of products from consolidated preforms including high amounts of porosity.

The metallic powder in the composition could take different forms, such as granular particles, spherical particles, spheroidal particles, fines, chips, or flakes. Granular particles are generally irregular in shape and have a rough surface texture. They are produced through methods such as crushing or milling. The irregular shape may promote mechanical interlocking during consolidation. Spherical particles are round in shape. They may be produced through atomization processes, where a molten metal stream is disrupted into droplets that solidify into spherical particles. These particles can pack closely and evenly. Spheroidal particles are similar to spherical particles but are slightly elongated or distorted. They share many of the packing and flow characteristics of spherical particles but can provide different compaction behavior due to their slightly irregular shape. Fines are very small particles, often produced as a byproduct of milling or atomization. They can fill in the spaces between larger particles, potentially improving packing efficiency. Chips are irregular, often elongated particles produced through machining or milling processes. They may interlock during consolidation, which can be beneficial in achieving a strong preform. Flakes are flat and thin, usually produced through processes like ball milling. Flakes can align during consolidation, potentially influencing the material's properties.

This diversity in particle morphology is a significant departure from traditional powder metallurgy (PM) processes, which often prefer only spherical particles. Traditional powder metallurgy processes favor spherical particles because of their ability to pack tightly and uniformly, aiding in achieving maximum density before and after consolidation. The close packing of spherical particles minimizes the amount of porosity and contributes to the overall densification during sintering or hot isostatic pressing. In contrast, the present method can effectively utilize a broader range of particle shapes due to the initial consolidation step that results in a preform with a relative density of less than 100 percent. Even highly irregularly shaped particles, such as chips or flakes, can be used without detrimental impact on the final product, as the preform is densified through subsequent cogging and incremental forming processes. This ability to use various particle shapes offers a greater degree of flexibility in the choice of feedstock material and can reduce costs by allowing the use of less expensive or more readily available forms of metallic powder.

In terms of particle size distribution, the metallic-powder composition can have a broad particle size distribution, intermediate particle size distribution or a narrow particle size distribution. The composition could be such that a 60 to 100 percent metallic powder is made up of particles smaller than 300 µm in their maximum dimension. At the same time, a significant fraction, ranging from 20 to 80 percent, may be made up of particles smaller than 150 µm. Furthermore, a distinct part, potentially 1 to 35 percent, can be made up of particles smaller than 60 µm. Alternatively, the metallic powder composition could be such that 70 to 100 percent of the metallic powder comprises particles smaller than 200 µm in their maximum dimension. Simultaneously, a significant proportion, 30 to 80 percent, could be made of particles smaller than 120 µm. Moreover, a considerable fraction, potentially 5 to 25 percent, could be composed of particles smaller than 50 µm. In terms of particle size distribution, an exemplary composition is such that: at least 90 percent of the metallic powder is made up of particles smaller than 170 µm in maximum dimension, at least 50 percent is made of particles smaller than 100 µm, and at least 10 percent is composed of particles smaller than 40 µm.

The metallic-powder composition used in this method can include a wide variety of metallic materials, such as a metal, an alloy, an intermetallic compound, or a metal-matrix composite. Metal is the simplest option and can include pure elements like aluminum, iron, copper, or precious metals. The properties of the final product will be largely determined by the inherent properties of the chosen metal and the resulting microstructure. Alloys are a blend of two or more metals or a metal and another element. Alloys are designed to impart improved properties to the material, such as increased strength, corrosion resistance, or reduced weight. Examples include steel (an alloy of iron and carbon), brass (an alloy of copper and zinc), or aluminum alloys (aluminum mixed with elements like copper, zinc, magnesium, or manganese). Alloys can be tailored to meet specific performance requirements of the final metallic article. Intermetallic compounds are a type of metallic alloy that forms a crystalline structure different from those of its constituent elements. These compounds often exhibit high-temperature stability, mechanical strength, and resistance to oxidation and corrosion. Examples include compounds such as TiAl (titanium aluminide) and Ni3Al (nickel aluminide). Intermetallic compounds can be used when the application requires high performance under harsh conditions, such as in aerospace or automotive engine parts. Metal-Matrix Composite (MMC) are a type of composite material in which a metallic matrix is combined with another material, as a reinforcement, that could be metallic or non-metallic such as ceramic or carbon fibers. The goal of using MMCs is to combine the desirable properties of the matrix and the reinforcement. For example, the matrix material might provide ductility and toughness, while the reinforcement provides strength and rigidity. MMCs can offer a balance of properties like strength, weight, and resistance to wear, temperature, or corrosion. To provide a few examples, the composition could include at least one of these elements or combinations: aluminum, aluminum alloy, titanium, titanium alloy, a superalloy, iron, iron alloy, nickel, nickel alloy, cobalt, cobalt alloy, refractory metal, refractory metal alloy, copper, copper alloy, precious metal, precious metal alloy, zirconium, zirconium alloy, hafnium, hafnium alloy, a rare-earth metal, a rare-earth-metal alloy, magnesium, magnesium alloy, steel, an intermetallic, a complex concentrated alloy, a high-entropy alloy, a medium-entropy alloy, a multicomponent alloy, and their respective metal-matrix composites.

The composition may be uniform or blended. For example, a blended composition may be created by blending a first metallic powder component, with a specific composition, with a second, differently-composed metallic powder component. This blending results in the final metallic powder composition used in the manufacturing process.

In a specific example, the composition includes titanium-based materials such as titanium, titanium alloy, Ti-6Al-4V, and Ti-5Al-5Mo-5V-3Cr. The use of titanium-based materials offers specific benefits within the context of the present method. Titanium and its alloys are known for their high strength-to-weight ratio and excellent corrosion resistance. However, titanium is also known for its poor castability due to its high reactivity with oxygen, nitrogen, and hydrogen at high temperatures, making conventional casting processes more challenging. Moreover, titanium's high melting point leads to significant energy costs in traditional processing methods, which often require the material to be fully molten.

In contrast, the present method operates with less-than-fully-dense preforms and without the need for full densification, allowing for energy-efficient processing of titanium-based materials. The initial consolidation step, combined with subsequent cogging and rotary incremental forming processes, enables efficient densification and shaping of the preform while keeping process temperatures relatively low. Furthermore, the process's mechanical working stages (cogging and rotary incremental forming) offer an added benefit for titanium. These stages result in a significant refinement of the material's microstructure, enhancing its mechanical properties such as strength and toughness. This is of particular value for titanium-based materials, which can exhibit improved mechanical performance upon work hardening. Thus, the present method offers an economical and efficient route to high-performance titanium-based articles, effectively addressing the unique processing challenges associated with titanium and its alloys.

In the step (110) of consolidating the metallic-powder composition to yield the consolidated preform, there are several processes that could be adopted.

The consolidation step could involve the pressing of the metallic-powder composition to apply pressure to the metallic-powder composition to yield the consolidated preform. This pressure application can be achieved through several techniques. One such technique could be cold pressing, where the metallic-powder composition is compacted at or near room temperature. Alternatively, the consolidation could involve hot pressing, where the metallic-powder composition is compacted under elevated temperatures. Hot pressing can result in a significant reduction in the porosity of the consolidated preform, promoting densification and potentially enhancing the mechanical properties of the resultant preform. Both cold and hot pressing could be performed under isostatic or non-isostatic conditions. In isostatic pressing, pressure is applied equally in all directions, leading to a uniform density throughout the consolidated preform.

When considering the pressure magnitude for the pressing process, there is a broad range that may be applied based on various factors. A pressure of at least 5 kilopounds per square inch (ksi) might be exerted on the metallic-powder composition. This can be suitable for certain metallic powders and desired preform densities. However, higher pressures may be used as well. For example, pressures of at least 10 ksi, at least 20 ksi, or even at least 30 ksi might be applied in situations where a higher initial density of the consolidated preform is desired. These higher pressures can result in preforms with reduced initial porosity, decreasing the number of subsequent cogging and incremental forming passes required. In some cases, even higher pressures, such as at least 40 ksi, at least 50 ksi, or more, could be utilized. These extreme pressures might be beneficial when working with harder or more refractory metallic powders, aiding in their consolidation. The specific pressure chosen can be tuned based on factors such as the nature of the metallic powder, the desired density of the consolidated preform, and the specific requirements of the final metallic article.

The consolidation step may also involve a sintering process, which is a method used to create a solid mass from the metallic-powder composition using heat without actually melting the powder particles. In this method, the metallic powder is heated to a temperature below its melting point, but high enough to allow diffusion and other atomic transport processes to occur. This heat causes the surfaces of the powder particles to bond together, creating strong, permanent bonds between them and forming a solid material. The sintering may be performed in an inert-gas environment. Many metals react with atmospheric oxygen, nitrogen, and other gases when heated, leading to oxidation or other unwanted chemical reactions that can degrade the properties of the final metallic article. By performing the sintering in an environment filled with inert gas, such as argon or helium, these undesired reactions can be minimized or prevented. The sintering temperature, duration, and the specific inert gas used can be controlled based on the specific requirements of the metallic-powder composition and the final product.

The sintering process in this method can be an incomplete or partial sintering. Traditional sintering processes aim to achieve near full density, and thereby minimize porosity within the material. However, in the present method, the sintering process can achieve a preform with a certain amount of porosity, resulting in a relative density less than 100 percent. Partial sintering involves controlling the sintering conditions, such as temperature, duration, and atmosphere, to reach a desired level of bonding between the powder particles, which leaves some level of porosity within the consolidated preform. The temperature is kept at a level high enough to activate bonding mechanisms, such as diffusion, but not so high as to completely eliminate the spaces (pores) between the powder particles. The duration of the sintering process may also be reduced, a shorter sintering time may result in less bonding and higher porosity. In this way, the consolidation step can generate a consolidated preform with a controlled amount of porosity. This approach allows for subsequent steps in the method to continue the densification process, where the preform undergoes deformation via processes such as cogging and rotary incremental forming. These steps can close up the remaining porosity, achieving the desired final density and mechanical properties in the wrought metallic article. This feature of using incomplete sintering enables the method to be more economical and efficient compared to traditional full-densification approaches, as it reduces the energy requirements for the sintering step and allows for greater microstructural refinement in the subsequent forming processes.

In addition to pressing and sintering, the consolidation step could involve other consolidation processes such as extrusion, spark plasma sintering, direct metal laser sintering (DMLS), or selective laser melting (SLM), among others. Each consolidation process has its advantages and limitations, and the choice of process depends on factors such as the type of metallic-powder composition and the desired properties of the consolidated preform.

The method employs two key deformation processes to refine the consolidated preform: cogging and rotary incremental forming. Cogging is a process where the consolidated preform undergoes a series of compressive blows, which reduce its cross-sectional area and extend its length. This step is typically conducted through the use of specialized forging presses or hammers and involves successive forging sequences. Such sequences can contribute to reducing the centerline porosity in the preform. The cogging operation applies global deformation, providing densification and shape to the preform. This process achieves crucial objectives: on a macro-scale, it reduces the overall cross-sectional area of the consolidated preform. Simultaneously, the application of high pressures and deformation aids in breaking up and reducing the centerline porosity within the preform, as the spaces between particles are forced to close. This process results in densification of the material and refines the microstructure, enhancing the mechanical properties of the final product.

On the other hand, the method also employs a rotary incremental forming process to refine the preform further. This process involves a tool that progressively and locally deforms the preform in a rotational manner, causing further reduction in its cross-sectional area. This process can be executed in several passes, each pass gradually changing the shape and size of the preform. Unlike cogging, which applies global deformation, rotary incremental forming induces localized plastic deformation at the contact point between the tool and the preform. This localized deformation effectively closes up surface pores, thereby reducing the surface porosity of the preform. The cumulative effect of the rotary incremental forming process is further densification of the surface of the preform and a refined surface microstructure. Both effects contribute to the improved properties of the final wrought metallic article. The process not only leads to further densification but also assists in achieving a better surface finish in the final metallic article.

The cogging process and the rotary incremental forming process can be conducted in any order, as per the requirements. The combination of these two processes provides a systematic reduction of porosity in the consolidated preform. While cogging primarily targets the centerline porosity, rotary incremental forming effectively reduces surface porosity. This dual approach ensures that the entire body of the preform, from the center to the surface, is densified. This feature of the present method contributes to efficient manufacturing of a wrought metallic article with excellent mechanical properties, regardless of the order of the processes.

Cogging, as a metalworking process, is a versatile operation that can be performed in several ways, such as through open die forging, upsetting, pancaking, or billeting. These are all sub-processes that can be classified under the broader cogging process. Open die forging involves deforming the consolidated preform between two dies that do not completely enclose the material. The dies hammer or press the preform, reducing its cross-sectional area and lengthening it. This process allows for large reductions in cross-section and is particularly effective at reducing centerline porosity in the preform. Upsetting forging is a process where a preform is placed vertically, and force is applied to the top and bottom surfaces, decreasing its height. Pancaking is a similar process to upsetting but is used to describe a specific instance where the preform is deformed into a flatter shape. This can help to close centerline porosity and increase the density of the material. Billeting is another forging operation that aims to create a billet, a long, usually rectangular or cylindrical, piece of metal with a standardized cross-sectional size. This is achieved by deforming the preform through a series of hammer or press blows, reducing its cross-sectional area and lengthening it. Each of these processes can be used in the cogging step of the described method, depending on the specific requirements of the metallic article being manufactured. The key principle behind all these processes is the application of force to deform the preform, reducing its cross-sectional area and enhancing its densification. The choice between open die forging, upsetting, pancaking, and billeting would be made based on the desired final shape and size of the metallic article, as well as the specific properties of the metallic-powder composition.

In the process of reducing the cross-sectional area of the consolidated preform via the cogging process, the approach may be staged or progressive, involving multiple forging passes each reducing the cross-sectional area by a different degree.

The cross-sectional area of the consolidated preform may be reduced via an initial forming pass of the cogging process that results in a modest reduction of the cross-sectional area. This initial pass can often be considered a 'softening' or 'conditioning' stage, where the preform is prepared for more significant deformation in subsequent stages. This initial pass does not significantly alter the dimensions of the preform, perhaps reducing the cross-sectional area by no more than 2 percent, 1.5 percent, or even as little as 1 percent. Despite this modest dimensional change, the initial forming pass plays a role in initiating the closure of centerline porosity in the consolidated preform, without damaging or fracturing the preform.

After the initial forming pass, further reduction of the decreased cross-sectional area of the consolidated preform is achieved via one or more subsequent forming passes of the cogging process. The subsequent pass reduces the cross-sectional area by a greater percentage than the initial forming pass. This could be a reduction of at least 2 percent, 3 percent, 5 percent, or in some cases even 10 percent or more. These subsequent forming passes continue to close up the centerline porosity and further densify the preform, while also beginning to shape the preform closer to the final desired shape of the metallic article.

In some instances, the method can include additional forming passes that progressively reduce the cross-sectional area. For example, a second subsequent forming pass can reduce the further-decreased cross-sectional area of the consolidated preform by at least 6 percent, or in another example, at least 10 percent. Each of these passes serves to further refine and shape the preform, enhancing densification and improving the microstructure and mechanical properties of the final product.

This staged, progressive approach to the cogging process allows for a carefully controlled and efficient method of transforming the consolidated preform into the final metallic article, minimizing the risk of damage or fracture to the preform, and enhancing the properties and quality of the final product.

In an example, the step of reducing the cross-sectional area of the consolidated preform via at least one forming pass of a cogging process may include: reducing the cross-sectional area of the consolidated preform via an initial forming pass of a cogging process so that the consolidated preform has a decreased cross-sectional area; and reducing the decreased cross-sectional area of the consolidated preform via a subsequent forming pass of the cogging process by a greater percentage than that, by which the cross-sectional area of the consolidated preform was reduced during the initial forming pass. The amount, by which the initial forming pass of the cogging process reduces the cross-sectional area of the consolidated preform, may be sufficient to close centerline porosity of the consolidated preform without damaging the preform.

In an example, the initial forming pass of the cogging process may reduce the cross-sectional area of the consolidated preform by at most 2 percent.

In an example, the initial forming pass of the cogging process may reduce the cross-sectional area of the consolidated preform by at most 1.5 percent.

In an example, the initial forming pass of the cogging process may reduce the cross-sectional area of the consolidated preform by at most 1 percent.

In an example, the subsequent forming pass of the cogging process may reduce the decreased cross-sectional area of the consolidated preform by at least 2 percent.

In an example, the subsequent forming pass of the cogging process may reduce the decreased cross-sectional area of the consolidated preform by at least 3 percent.

In an example, the subsequent forming pass of the cogging process may reduce the decreased cross-sectional area of the consolidated preform by at least 5 percent.

In an example, the subsequent forming pass of the cogging process may reduce the decreased cross-sectional area of the consolidated preform by at least 10 percent.

In an example, the subsequent forming pass of the cogging process reduces the decreased cross-sectional area of the consolidated preform by at least 3 percent so that the consolidated preform has a further-decreased cross-sectional area, and a second subsequent forming pass of the cogging process reduces the further-decreased cross-sectional area of the consolidated preform by at least 6 percent.

In an example, the subsequent forming pass of the cogging process reduces the decreased cross-sectional area of the consolidated preform by at least 5 percent so that the consolidated preform has a further-decreased cross-sectional area, and a second subsequent forming pass of the cogging process reduces the further-decreased cross-sectional area of the consolidated preform by at least 10 percent.

The cogging process is performed at a temperature conducive to effective and efficient deformation. This temperature, known as the cogging-process temperature, is selected taking into account several factors, including the type of metallic powder used to form the consolidated preform, the extent of deformation desired, and the planned sequence of forming operations.

The cogging-process temperature is chosen relative to the melting temperature of the metallic-powder composition. This is done to ensure that the preform remains in a solid state during the cogging process, while still being sufficiently malleable for effective deformation. The elevated temperature also aids in the densification process and assists in the closure of porosity.

In general, the cogging-process temperature may typically be at most 95 percent of the melting temperature (in degrees Kelvin) of the metallic-powder composition. This ensures the consolidated preform remains solid and workable without melting. However, the cogging-process temperature could be set within a range lower than this maximum, based on the specific requirements of the cogging process and the final metallic article.

For instance, the cogging-process temperature may be within a range of 60 percent to 90 percent of the melting temperature of the metallic-powder composition. Alternatively, for some metallic powders, it may be more suitable for the cogging-process temperature to be within a range of 40 percent to 60 percent, or even 20 percent to 40 percent, of the melting temperature.

In some cases, it could be beneficial for the cogging-process temperature to be quite low, at most 20 percent of the melting temperature of the metallic-powder composition. Such a low temperature could be useful when working with certain metallic powders that have high melting temperatures or when the cogging process aims to impose a cold deformation on the preform.

In all these cases, the specific cogging-process temperature chosen is tailored to the metallic-powder composition, the desired preform characteristics, and the specific requirements of the final metallic article. The goal is to ensure efficient and effective densification and deformation, while minimizing any risk of damaging or melting the preform.

In an example, the cogging-process temperature is at most 95 percent of a melting temperature (in degrees Kelvin) of the metallic-powder composition.

In an example, the cogging-process temperature is in a temperature range of 60 percent to 90 percent of the melting temperature (in degrees Kelvin) of the metallic-powder composition.

In an example, the cogging-process temperature is in a temperature range of 40 percent to 60 percent of the melting temperature (in degrees Kelvin) of the metallic-powder composition.

In an example, the cogging-process temperature is in a temperature range of 20 percent to 40 percent of the melting temperature (in degrees Kelvin) of the metallic-powder composition.

In an example, the cogging-process temperature is at most 20 percent of a melting temperature (in degrees Kelvin) of the metallic-powder composition.

The effectiveness and efficiency of the cogging process can be further controlled through adjustment of the cogging-process average equivalent strain rate. The cogging-process average equivalent strain rate is a parameter in forging operations, significantly influencing the material behavior, including the rate of densification, microstructure evolution, and the final properties of the metallic article.

In the described method, the cogging process can be performed at a variety of strain rates, with the specific rate chosen depending on the characteristics of the metallic-powder composition and the desired properties of the final metallic article. This strain rate could range from as low as 0.00001 s-1 up to 100 s-1. This range covers a broad spectrum of deformation speeds, from quasi-static conditions to very rapid deformation.

For certain metallic powders and preform conditions, lower strain rates may be preferred. As such, the cogging process could be performed at an average equivalent strain rate ranging from 0.00001 s-1 to 0.01 s-1. Lower strain rates may allow for more controlled deformation, potentially reducing the risk of damage to the preform.

Alternatively, for other metallic powders or when faster deformation is desirable, the cogging-process average equivalent strain rate may be set to range from 0.01 s-1 to 1 s-1, or in some cases, from 1 s-1 to 100 s-1. Higher strain rates can allow for quicker deformation, potentially increasing the efficiency of the cogging process.

By carefully selecting the strain rate, the cogging process can be optimized to maximize the densification, enhance the microstructure, and improve the mechanical properties of the final metallic article, while also ensuring the efficiency of the process.

In an example, the step of reducing the cross-sectional area of the consolidated preform via the at least one forming pass of a cogging process is performed at a cogging-process average equivalent strain rate that ranges from 0.00001 s⁻¹ to 100 s⁻¹.

In an example, the step of reducing the cross-sectional area of the consolidated preform via the at least one forming pass of a cogging process is performed at a cogging-process average equivalent strain rate that ranges from 0.00001 s⁻¹ to 0.01 s⁻¹.

In an example, the step of reducing the cross-sectional area of the consolidated preform via the at least one forming pass of a cogging process is performed at a cogging-process average equivalent strain rate that ranges from 0.01 s⁻¹ to 1 s⁻¹.

In an example, the step of reducing the cross-sectional area of the consolidated preform via the at least one forming pass of a cogging process is performed at a cogging-process average equivalent strain rate that ranges from 1 s⁻¹ to 100 s⁻¹.

Annealing, a heat treatment process, can also play a significant role in the method. Annealing involves heating the preform to a specific temperature, holding it at this temperature for a certain duration, and then allowing it to cool down. This heat treatment can serve multiple purposes, including relieving the stresses induced during the cogging process, promoting further densification, and refining the microstructure of the preform, depending on the type of metallic material.

The annealing process can be performed at various stages during the method, depending on the specific requirements of the metallic article. It can be carried out prior to the cogging process, serving as a preparatory step that conditions the consolidated preform for the subsequent deformation. This initial annealing can improve the ductility of the metallic-powder composition, making it more amenable to the upcoming cogging process.

Annealing can also be applied intermediate to the cogging process. Between forming passes, the preform can be annealed to relieve the deformation-induced stresses. This intermediate annealing can prevent the build-up of excessive internal stresses, which could potentially lead to cracking or other forms of damage in the preform. Furthermore, by refining the microstructure between passes, intermediate annealing can promote more uniform densification and improve the mechanical properties of the final metallic article.

Post-cogging annealing can be carried out. Once the cogging process is complete, the preform can be annealed to relieve any remaining stresses.

The specific annealing conditions, such as the temperature, duration, and cooling rate, can be tailored based on the nature of the metallic powder, the specific stage of the method, and the desired properties of the final product.

Rotary incremental forming is another versatile operation that may involve several sub-processes such as rotary swaging, rotary pilgering, rotary piercing, or trepanning. These processes can be classified under the broader scope of rotary incremental forming. The key principle behind all these processes is the application of a localized deformation to the preform, further reducing its cross-sectional area and enhancing its densification. Rotary swaging, for instance, is a method where the preform is rotated and compressed by a set of reciprocating dies, reducing its diameter and improving the grain structure. This process can result in a finished piece with enhanced mechanical properties and reduced surface porosity. Rotary pilgering is typically employed to reduce the diameter and wall thickness of tubular preforms. The preform is rotated and reciprocated over a mandrel while being worked by a pair of oblique-angled dies. The combined rotary and reciprocating motion imparts incremental deformation which can effectively reduce surface porosity, refining the structure of the preform. Rotary piercing is a process where the preform is subjected to a combined rotary and forward motion, while being internally deformed by a piercing mandrel and externally by a set of rollers. Trepanning is a process in which a preform is rotated and a drill or cutting tool is used to remove material in a circular path, creating deep holes or cavities within the preform. This process may be utilized in conjunction with other rotary incremental forming operations for creating complex geometries within the metallic article. Each of these rotary incremental forming processes allows for controlled deformation of the preform, further reducing its cross-sectional area and promoting densification. They also contribute to refining the microstructure and reducing surface porosity, both of which enhance the properties of the final metallic article. The choice between rotary swaging, pilgering, piercing, and trepanning will depend on the desired final shape and size of the metallic article, as well as the specific properties of the metallic-powder composition.

In the process of reducing the cross-sectional area of the preform via the rotary incremental forming process, the approach may be staged or progressive, involving multiple forming passes each reducing the cross-sectional area by a different degree.

The cross-sectional area of the preform may be reduced via an initial forming pass of the rotary incremental forming process that results in a modest reduction of the cross-sectional area. This initial pass can often be considered a 'softening' or 'conditioning' stage, where the preform is prepared for more significant deformation in subsequent stages. This initial pass does not significantly alter the dimensions of the preform, perhaps reducing the cross-sectional area by no more than 2 percent, 1.5 percent, or even as little as 1 percent. Despite this modest dimensional change, the initial forming pass plays a role in initiating the closure of surface porosity in the preform, without damaging or fracturing the preform.

After the initial forming pass, further reduction of the decreased cross-sectional area of the preform is achieved via one or more subsequent forming passes of the rotary incremental forming process. The subsequent pass reduces the cross-sectional area by a greater percentage than the initial forming pass. This could be a reduction of at least 2 percent, 3 percent, 5 percent, or in some cases even 10 percent or more. These subsequent forming passes continue to close up the surface porosity and further densify the preform, while also beginning to shape the preform closer to the final desired shape of the metallic article.

In some instances, the method can include additional forming passes that progressively reduce the cross-sectional area. For example, a second subsequent forming pass can reduce the further-decreased cross-sectional area of the preform by at least 6 percent, or in another example, at least 10 percent. Each of these passes serves to further refine and shape the preform, enhancing densification and improving the microstructure and mechanical properties of the final product.

This staged, progressive approach to the rotary incremental forming process allows for a carefully controlled and efficient method of transforming the preform into the final metallic article, minimizing the risk of damage or fracture to the preform, and enhancing the properties and quality of the final product.

In an example, the step of reducing the cross-sectional area of the preform via at least one forming pass of a rotary incremental forming process includes: reducing the cross-sectional area of the preform via an initial forming pass of a rotary incremental forming process so that the preform has a decreased cross-sectional area; and reducing the decreased cross-sectional area of the preform via a subsequent forming pass of the rotary incremental forming process by a greater percentage than that, by which the cross-sectional area of the preform was reduced during the initial forming pass. The amount, by which the initial forming pass of the rotary incremental forming process reduces the cross-sectional area of the preform, may be sufficient to close surface porosity of the preform without damaging the preform.

In an example, the initial forming pass of the rotary incremental forming process reduces the cross-sectional area of the preform by at most 2 percent.

In an example, the initial forming pass of the rotary incremental forming process reduces the cross-sectional area of the preform by at most 1.5 percent.

In an example, the initial forming pass of the rotary incremental forming process reduces the cross-sectional area of the preform by at most 1 percent.

In an example, the subsequent forming pass of the rotary incremental forming process reduces the decreased cross-sectional area of the preform by at least 2 percent.

In an example, the subsequent forming pass of the rotary incremental forming process reduces the decreased cross-sectional area of the preform by at least 3 percent.

In an example, the subsequent forming pass of the rotary incremental forming process reduces the decreased cross-sectional area of the preform by at least 5 percent.

In an example, the subsequent forming pass of the rotary incremental forming process reduces the decreased cross-sectional area of the preform by at least 10 percent.

In an example, the subsequent forming pass of the rotary incremental forming process reduces the decreased cross-sectional area of the preform by at least 3 percent so that the preform has a further-decreased cross-sectional area, and a second subsequent forming pass of the rotary incremental forming process reduces the further-decreased cross-sectional area of the preform by at least 6 percent.

In an example, the subsequent forming pass of the rotary incremental forming process reduces the decreased cross-sectional area of the preform by at least 5 percent so that the preform has a further-decreased cross-sectional area, and a second subsequent forming pass of the rotary incremental forming process reduces the further-decreased cross-sectional area of the preform by at least 10 percent.

The rotary incremental forming process, like the process, can be performed at different temperatures. The temperature during this process, which we refer to as the 'rotary incremental forming-process temperature', is selected based on a variety of factors, including the material properties of the metallic-powder composition, the amount of reduction in cross-sectional area, and whether intermediate annealing steps are included in the process.

In one example, the rotary incremental forming-process temperature is at most 95 percent of the melting temperature of the metallic-powder composition, measured in degrees Kelvin. The exact temperature within this range can be selected based on the specific requirements of the process and the desired properties of the final metallic article. For example, in certain cases, the rotary incremental forming-process temperature may be in a range of 60 percent to 90 percent of the melting temperature of the metallic-powder composition. In other cases, it may be in a range of 40 percent to 60 percent, or 20 percent to 40 percent. In certain examples, the rotary incremental forming-process temperature could be at most 20 percent of the melting temperature of the metallic-powder composition.

The rotary incremental forming process is also influenced by the average equivalent strain rate applied during the process. The average equivalent strain rate can vary over a wide range, from as low as 0.00001 s-1 to as high as 100 s-1, depending on factors such as the material properties of the metallic-powder composition and the specifics of the forming process. In certain examples, the rotary incremental forming process may be performed at an average equivalent strain rate ranging from 0.00001 s-1 to 0.01 s-1, from 0.01 s-1 to 1 s-1, or from 1 s-1 to 100 s-1. The choice of strain rate can affect factors such as the rate of reduction of the cross-sectional area, the amount of heat generated during the process, and the properties of the final metallic article.

As with the cogging process, annealing may also be incorporated into the rotary incremental forming process. Annealing can be performed before, after, or in between the forming passes of the rotary incremental forming process. This annealing process, which involves heating the preform to a specific temperature and then slowly cooling it, can help to relieve stresses in the preform, enhance the material's ductility, and improve the material's response to subsequent deformation. The specifics of the annealing process, such as the annealing temperature and the duration of the annealing step, can be tailored based on the material properties of the metallic-powder composition and the requirements of the forming process.

In one example, the method may include a step of annealing the preform between the cogging process and the rotary incremental forming process. This annealing step can help to prepare the preform for the deformation that will occur during the subsequent forming process, improving the ductility of the material and reducing the risk of fracture or damage during the process.

In another example, the method may include one or more intermediate annealing steps that are performed in between forming passes of the rotary incremental forming process. These intermediate annealing steps can help to relieve stresses that are induced in the preform during the forming process, preventing the buildup of excessive stress and reducing the risk of fracture or damage.

In yet another example, the method may include a step of annealing the preform after the rotary incremental forming process. This post-forming annealing step can help to relieve any residual stresses in the preform and improve the properties of the final metallic article.

In any of these examples, the annealing step may involve heating the preform to an annealing temperature that is less than the melting temperature of the metallic-powder composition, maintaining the preform at the annealing temperature for a specified duration, and then cooling the preform at a controlled rate. The specifics of the annealing process, including the annealing temperature, the duration of the annealing step, and the cooling rate, can be tailored based on the material properties of the metallic-powder composition and the requirements of the forming process.

In certain examples of the method, an additional feature could be implemented, wherein the rotary incremental forming process is performed before the cogging process. This pre-cogging rotary incremental forming process serves to close the surface porosity of the consolidated preform, thereby mitigating the risk of surface tearing during the cogging process, which may occur under certain conditions such as specific material types, temperatures, strain rates, and porosity contents. After the pre-cogging rotary incremental forming process has been conducted to reduce surface porosity, the cogging process is performed. This step, as previously described, involves reducing the cross-sectional area of the preform and helps to further decrease centerline porosity. Subsequently, the rotary incremental forming process is performed again, continuing to reduce the cross-sectional area and further refine the surface of the cogged preform.

The pre-cogging rotary incremental forming process can incorporate any or all features of the post-cogging rotary incremental forming process previously described, depending on the specific requirements of the metallic article being manufactured. Such a sequence of operations provides flexibility in the manufacturing process while ensuring the production of a high-quality, fully dense wrought metallic article with minimal surface porosity and tearing. This sequence of processes - the pre-cogging rotary incremental forming process, the cogging process, and the post-cogging rotary incremental forming process - offers a controlled, efficient method for shaping the consolidated preform into a final metallic article. It reduces the risk of surface damage or fracture to the preform, while enhancing the properties and quality of the final product.

The present description is further directed to a wrought metallic article, as produced by the method described above, embodies a number of advantageous characteristics. These advantages arise from the distinctive aspects of the method, which includes a carefully sequenced series of processing steps, including consolidation of the metallic-powder composition, cogging, and rotary incremental forming, each performed under specific conditions to optimize the properties of the final product. This method enables the production of a wrought metallic article with excellent mechanical properties, such as high strength, ductility, and toughness. The application of the cogging and rotary incremental forming processes provides thorough densification of the material and refines its microstructure, contributing to the superior mechanical performance of the final product. The method also leads to the creation of a metallic article with reduced porosity. The specific sequences of deformation in the cogging and rotary incremental forming processes, including the controlled reduction of cross-sectional areas, aids in eliminating both centerline and surface porosity in the consolidated preform. This reduction in porosity not only improves the mechanical properties of the wrought article but also enhances its corrosion resistance and surface finish. The wrought metallic article also has a uniform and controlled grain structure, which is a result of the specific forming and possible annealing conditions utilized in the method. This grain structure can be tailored to the requirements of specific applications, making the wrought metallic article highly versatile for various industrial uses. Overall, the wrought metallic article produced according to the described method exhibits a combination of superior mechanical properties, reduced porosity, enhanced surface finish, and a tailored grain structure. This makes it suitable for a variety of applications, including, but not limited to, aerospace, automotive, construction, and other industrial applications where high performance under demanding conditions is required.

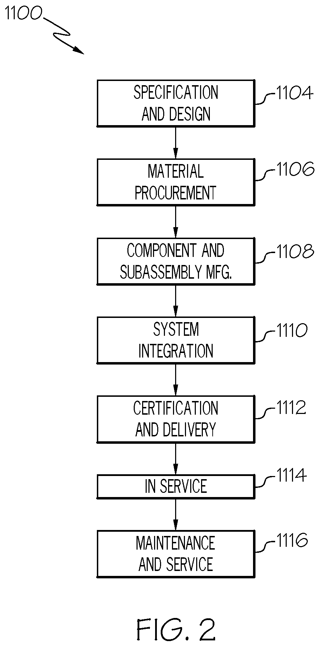

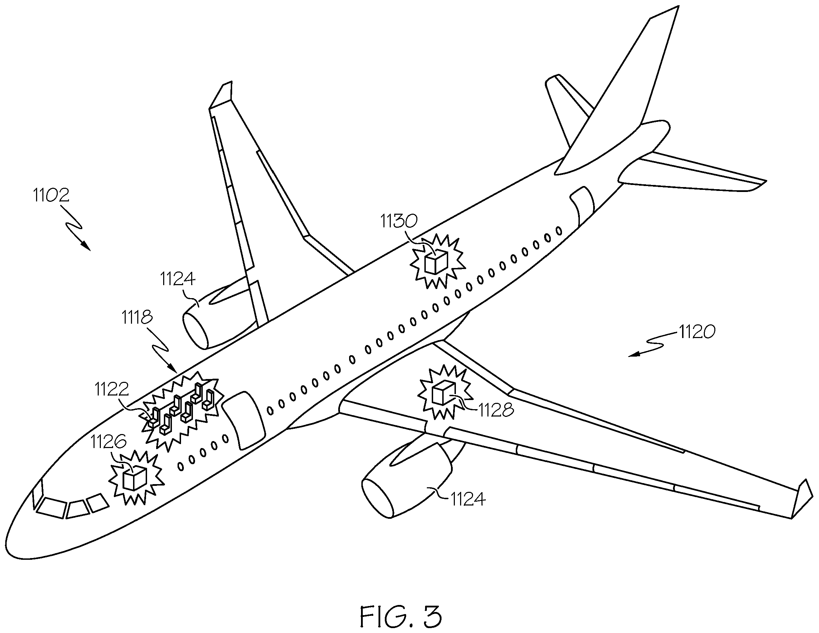

Examples of the subject matter disclosed herein may be described in the context of aircraft manufacturing and service method 1100 as shown in FIG. 2 and aircraft 1102 as shown in FIG. 3. During pre-production, illustrative method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 3, aircraft 1102 produced by illustrative method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Apparatus(es) and method(s) shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the apparatus(es), method(s), or combination thereof may be utilized during production stages (block 1108 and block 1110), for example, by substantially expediting assembly of or reducing the cost of aircraft 1102. Similarly, one or more examples of the apparatus or method realizations, or a combination thereof, may be utilized, for example and without limitation, while aircraft 1102 is in service (block 1114) and/or during maintenance and service (block 1116).

Further, the disclosure comprises examples according to the following clauses:
Clause 1. A method for manufacturing a wrought metallic article from a metallic-powder composition, the method comprising steps of: consolidating the metallic-powder composition to yield a consolidated preform having a cross-sectional area and a relative density of less than 100 percent; reducing the cross-sectional area of the consolidated preform via at least one forming pass of one of a cogging process and a rotary incremental forming process, thereby yielding an intermediate preform; and reducing the cross-sectional area of the intermediate preform via at least one forming pass of another of the cogging process and the rotary incremental forming process.
Clause 2. The method according to Clause 1, wherein the metallic-powder composition comprises at least one of a metal, an alloy, an intermetallic, and a metal-matrix composite.
Clause 3. The method according to Clause 1 or Clause 2, wherein the metallic-powder composition comprises at least one of aluminum; aluminum alloy; a metal-matrix composite, comprising aluminum; titanium; titanium alloy; a metal-matrix composite, comprising titanium; a superalloy; iron; iron alloy; a metal-matrix composite, comprising iron; nickel; nickel alloy; a metal-matrix composite, comprising nickel; cobalt; cobalt alloy; a metal-matrix composite, comprising cobalt; a refractory metal; a refractory metal alloy; a metal-matrix composite, comprising a refractory metal; copper; copper alloy; a metal-matrix composite, comprising copper; a precious metal; a precious-metal alloy; a metal-matrix composite, comprising a precious metal; zirconium; zirconium alloy; a metal-matrix composite, comprising zirconium; hafnium; hafnium alloy; a metal-matrix composite, comprising hafnium; a rare-earth metal; a rare-earth-metal alloy; a metal-matrix composite, comprising a rare-earth metal; magnesium; magnesium alloy; a metal-matrix composite, comprising magnesium; steel; a metal-matrix composite, comprising steel; an intermetallic; a complex concentrated alloy; a metal-matrix composite, comprising a complex concentrated alloy; a high-entropy alloy; a metal-matrix composite, comprising a high-entropy alloy; a medium-entropy alloy; a metal-matrix composite, comprising a medium-entropy alloy; a multicomponent alloy; and a metal-matrix composite, comprising a multicomponent alloy.
Clause 4. The method according to any preceding Clause, wherein the metallic-powder composition comprises at least one of titanium and titanium alloy.
Clause 5. The method according to any preceding Clause, wherein the metallic-powder composition comprises at least one of Ti-6Al-4V and Ti-5Al-5Mo-5V-3Cr.
Clause 6. The method according to any preceding Clause, wherein the metallic-powder composition comprises at least one of granular particles, spherical particles, spheroidal particles, fines, chips, or flakes.
Clause 7. The method according to any preceding Clause, wherein the metallic-powder composition has a particle-size distribution such that: at least 90 percent of the metallic-powder composition is composed of particles, having a maximum dimension that is less than 170 µm, at least 50 percent of the metallic-powder composition is composed of particles, having a maximum dimension that is less than 100 µm, and at least 10 percent of the metallic-powder composition is composed of particles, having a maximum dimension that is less than 40 µm.
Clause 8. The method according to any preceding Clause, further comprising blending a first metallic-powder component, having a first composition, with a second metallic-powder component, having a second composition, to yield the metallic-powder composition, wherein the first composition is different from the second composition.
Clause 9. The method according to any preceding Clause, wherein the step of consolidating the metallic-powder composition (110) comprises pressing of the metallic-powder composition.
Clause 10. The method according to Clause 9, wherein the step of pressing of the metallic-powder composition comprises isostatic pressing of the metallic-powder composition.
Clause 11. The method according to any one of Clauses 9 to 10, wherein the step of consolidating the metallic-powder composition comprises cold pressing of the metallic-powder composition.
Clause 12. The method according to any one of Clauses 9 to 11, wherein the step of consolidating the metallic-powder composition comprises hot pressing of the metallic-powder composition.
Clause 13. The method according to any one of Clauses 9 to 12, wherein the pressing exerts a pressure of at least 5 ksi on the metallic-powder composition.
Clause 14. The method according to any preceding Clause, wherein the step of consolidating the metallic-powder composition comprises a step of sintering the metallic-powder composition.
Clause 15. The method according to Clause 14, wherein the step of sintering the metallic-powder composition is performed in an inert-gas environment.
Clause 16. The method according to any preceding Clause, wherein, following the step of consolidating the metallic-powder composition, the relative density of the consolidated preform is at most 99 percent.
Clause 17. The method according to any one of Clauses 1 to 15, wherein, following the step of consolidating the metallic-powder composition, the relative density of the consolidated preform is at most 98 percent.
Clause 18. The method according to any one of Clauses 1 to 15, wherein, following the step of consolidating the metallic-powder composition, the relative density of the consolidated preform is at most 97 percent.
Clause 19. The method according to any one of Clauses 1 to 15, wherein, following the step of consolidating the metallic-powder composition, the relative density of the consolidated preform is at most 96 percent.
Clause 20. The method according to any one of Clauses 1 to 15, wherein, following the step of consolidating the metallic-powder composition, the relative density of the consolidated preform is at most 95 percent.
Clause 21. The method according to any one of Clauses 1 to 15, wherein, following the step of consolidating the metallic-powder composition, the relative density of the consolidated preform is at most 90 percent.
Clause 22. The method according to any one of Clauses 1 to 15, wherein, following the step of consolidating the metallic-powder composition, the relative density of the consolidated preform is at most 85 percent.
Clause 23. The method according to any one of Clauses 1 to 15, wherein, following the step of consolidating the metallic-powder composition, the relative density of the consolidated preform is at most 80 percent.
Clause 24. The method according to any one of Clauses 1 to 15, wherein, following the step of consolidating the metallic-powder composition, the relative density of the consolidated preform is at most 70 percent.
Clause 25. The method according to any one of Clauses 1 to 15, wherein, following the step of consolidating the metallic-powder composition, the relative density of the consolidated preform is at most 60 percent.
Clause 26. The method according to any preceding Clause, wherein the cogging process is an open die forging process.
Clause 27. The method according to any one of Clauses 1 to 25, wherein the cogging process is an upsetting process.
Clause 28. The method according to any one of Clauses 1 to 25, wherein the cogging process is a pancaking process.
Clause 29. The method according to any one of Clauses 1 to 25, wherein the cogging process is a billeting process.
Clause 30. The method according to any preceding Clause, wherein the step of reducing the cross-sectional area of the consolidated preform via at least one forming pass of a cogging process comprises: reducing the cross-sectional area of the consolidated preform via an initial forming pass of a cogging process so that the consolidated preform has a decreased cross-sectional area; and reducing the decreased cross-sectional area of the consolidated preform via a subsequent forming pass of the cogging process by a greater percentage than that, by which the cross-sectional area of the consolidated preform was reduced during the initial forming pass.
Clause 31. The method according to Clause 30, wherein the initial forming pass of the cogging process reduces the cross-sectional area of the consolidated preform by at most 2 percent.
Clause 32. The method according to Clause 30, wherein the initial forming pass of the cogging process reduces the cross-sectional area of the consolidated preform by at most 1.5 percent.
Clause 33. The method according to Clause 30, wherein the initial forming pass of the cogging process reduces the cross-sectional area of the consolidated preform by at most 1 percent.
Clause 34. The method according to any one of Clauses 30 to 33, wherein an amount by which the initial forming pass of the cogging process reduces the cross-sectional area of the consolidated preform is sufficient to close centerline porosity of the consolidated preform without damaging the preform.
Clause 35. The method according to any one of Clauses 30 to 34, wherein the subsequent forming pass of the cogging process reduces the decreased cross-sectional area of the consolidated preform by at least 2 percent.
Clause 36. The method according to any one of Clauses 30 to 34, wherein the subsequent forming pass of the cogging process reduces the decreased cross-sectional area of the consolidated preform by at least 3 percent.
Clause 37. The method according to any one of Clauses 30 to 34, wherein the subsequent forming pass of the cogging process reduces the decreased cross-sectional area of the consolidated preform by at least 5 percent.
Clause 38. The method according to any one of Clauses 30 to 34, wherein the subsequent forming pass of the cogging process reduces the decreased cross-sectional area of the consolidated preform by at least 10 percent.
Clause 39. The method according to any one of Clauses 30 to 38, wherein: the subsequent forming pass of the cogging process reduces the decreased cross-sectional area of the consolidated preform by at least 3 percent so that the consolidated preform has a further-decreased cross-sectional area, and a second subsequent forming pass of the cogging process reduces the further-decreased cross-sectional area of the consolidated preform by at least 6 percent.
Clause 40. The method according to any one of Clauses 30 to 39, wherein: the subsequent forming pass of the cogging process reduces the decreased cross-sectional area of the consolidated preform by at least 5 percent so that the consolidated preform has a further-decreased cross-sectional area, and a second subsequent forming pass of the cogging process reduces the further-decreased cross-sectional area of the consolidated preform by at least 10 percent.
Clause 41. The method according to any one of Clauses 1 to 40, wherein: the cogging process is performed at a cogging-process temperature (in degrees Kelvin), and the cogging-process temperature is at most 95 percent of a melting temperature (in degrees Kelvin) of the metallic-powder composition.
Clause 42. The method according to Clause 41, wherein the cogging-process temperature is in a temperature range of 60 percent to 90 percent of the melting temperature (in degrees Kelvin) of the metallic-powder composition.
Clause 43. The method according to Clause 41, wherein the cogging-process temperature is in a temperature range of 40 percent to 60 percent of the melting temperature (in degrees Kelvin) of the metallic-powder composition.
Clause 44. The method according to Clause 41, wherein the cogging-process temperature is in a temperature range of 20 percent to 40 percent of the melting temperature (in degrees Kelvin) of the metallic-powder composition.
Clause 45. The method according to Clause 41, wherein the cogging-process temperature is at most 20 percent of a melting temperature (in degrees Kelvin) of the metallic-powder composition.
Clause 46. The method according to any one of Clauses 1 to 45, wherein the step of reducing the cross-sectional area of the consolidated preform via the at least one forming pass of a cogging process is performed at a cogging-process average equivalent strain rate that ranges from 0.00001 s⁻¹ to 100 s⁻¹.
Clause 47. The method according to any one of Clauses 1 to 45, wherein the step of reducing the cross-sectional area of the consolidated preform via the at least one forming pass of a cogging process is performed at a cogging-process average equivalent strain rate that ranges from 0.00001 s⁻¹ to 0.01 s⁻¹.
Clause 48. The method according to any one of Clauses 1 to 45, wherein the step of reducing the cross-sectional area of the consolidated preform via the at least one forming pass of a cogging process is performed at a cogging-process average equivalent strain rate that ranges from 0.01 s⁻¹ to 1 s⁻¹.
Clause 49. The method according to any one of Clauses 1 to 45, wherein the step of reducing the cross-sectional area of the consolidated preform via the at least one forming pass of a cogging process is performed at a cogging-process average equivalent strain rate that ranges from 1 s⁻¹ to 100 s⁻¹.
Clause 50. The method according to any preceding Clause, further comprising a step of annealing the preform after the cogging step.
Clause 51. The method according to any one of Clauses 1 to 50, wherein the rotary incremental forming process is a rotary swaging process.
Clause 52. The method according to any one of Clauses 1 to 50, wherein the rotary incremental forming process is a rotary pilgering process.
Clause 53. The method according to any one of Clauses 1 to 50, wherein the rotary incremental forming process is a rotary piercing process.
Clause 54. The method according to any one of Clauses 1 to 50, wherein the rotary incremental forming process is a trepanning process.
Clause 55. The method according to any preceding Clause, wherein the step of reducing the cross-sectional area of the intermediate preform via at least one forming pass of a rotary incremental forming process comprises: reducing the cross-sectional area of the intermediate preform via an initial forming pass of a rotary incremental forming process so that the intermediate preform has a decreased cross-sectional area; and reducing the decreased cross-sectional area of the intermediate preform via a subsequent forming pass of the rotary incremental forming process by a greater percentage than that, by which the cross-sectional area of the intermediate preform was reduced during the initial forming pass.
Clause 56. The method according to Clause 55, wherein the initial forming pass of the rotary incremental forming process reduces the cross-sectional area of the intermediate preform by at most 2 percent.
Clause 57. The method according to Clause 55, wherein the initial forming pass of the rotary incremental forming process reduces the cross-sectional area of the intermediate preform by at most 1.5 percent.
Clause 58. The method according to Clause 55, wherein the initial forming pass of the rotary incremental forming process reduces the cross-sectional area of the intermediate preform by at most 1 percent.
Clause 59. The method according to any one of Clauses 55-58, wherein an amount by which the initial forming pass of the rotary incremental forming process reduces the cross-sectional area of the intermediate preform is sufficient to close surface porosity of the intermediate preform without damaging the preform.
Clause 60. The method according to any one of Clauses 55 to 59, wherein the subsequent forming pass of the rotary incremental forming process reduces the decreased cross-sectional area of the intermediate preform by at least 2 percent.
Clause 61. The method according to any one of Clauses 55 to 59, wherein the subsequent forming pass of the rotary incremental forming process reduces the decreased cross-sectional area of the intermediate preform by at least 3 percent.
Clause 62. The method according to any one of Clauses 55 to 59, wherein the subsequent forming pass of the rotary incremental forming process reduces the decreased cross-sectional area of the intermediate preform by at least 5 percent.
Clause 63. The method according to any one of Clauses 55 to 59, wherein the subsequent forming pass of the rotary incremental forming process reduces the decreased cross-sectional area of the intermediate preform by at least 10 percent.
Clause 64. The method according to any one of Clauses 55 to 63, wherein: the subsequent forming pass of the rotary incremental forming process reduces the decreased cross-sectional area of the intermediate preform by at least 3 percent so that the intermediate preform has a further-decreased cross-sectional area, and a second subsequent forming pass of the rotary incremental forming process reduces the further-decreased cross-sectional area of the intermediate preform by at least 6 percent.
Clause 65. The method according to any one of Clauses 55 to 64, wherein: the subsequent forming pass of the rotary incremental forming process reduces the decreased cross-sectional area of the intermediate preform by at least 5 percent so that the intermediate preform has a further-decreased cross-sectional area, and a second subsequent forming pass of the rotary incremental forming process reduces the further-decreased cross-sectional area of the intermediate preform by at least 10 percent.
Clause 66. The method according to any preceding Clause, wherein: the rotary incremental forming process is performed at a rotary-incremental-forming-process temperature (in degrees Kelvin), and the rotary-incremental-forming-process temperature is at most 95 percent of a melting temperature (in degrees Kelvin) of the metallic-powder composition.
Clause 67. The method according to Clause 66, wherein the rotary-incremental-forming-process temperature is in a temperature range of 60 percent to 90 percent of the melting temperature (in degrees Kelvin) of the metallic-powder composition.
Clause 68. The method according to Clause 66, wherein the rotary-incremental-forming-process temperature is in a temperature range of 40 percent to 60 percent of the melting temperature (in degrees Kelvin) of the metallic-powder composition.
Clause 69. The method according to Clause 66, wherein the rotary-incremental-forming-process temperature is in a temperature range of 20 percent to 40 percent of the melting temperature (in degrees Kelvin) of the metallic-powder composition.
Clause 70. The method according to Clause 66, wherein the rotary-incremental-forming-process temperature is at most 20 percent of a melting temperature (in degrees Kelvin) of the metallic-powder composition.
Clause 71. The method according to any one of Clauses 1 to 70, wherein the step of reducing the cross-sectional area of the intermediate preform via the at least one forming pass of a rotary incremental forming process is performed at a rotary-incremental-forming-process average equivalent strain rate that ranges from 0.00001 s⁻¹ to 100 s⁻¹.
Clause 72. The method according to any one of Clauses 1 to 70, wherein the step of reducing the cross-sectional area of the intermediate preform via the at least one forming pass of a rotary incremental forming process is performed at a rotary-incremental-forming-process average equivalent strain rate that ranges from 0.00001 s⁻¹ to 0.01 s⁻¹.
Clause 73. The method according to any one of Clauses 1 to 70, wherein the step of reducing the cross-sectional area of the intermediate preform via the at least one forming pass of a rotary incremental forming process is performed at a rotary-incremental-forming-process average equivalent strain rate that ranges from 0.01 s⁻¹ to 1 s⁻¹.
Clause 74. The method according to any one of Clauses 1 to 70, wherein the step of reducing the cross-sectional area of the intermediate preform via the at least one forming pass of a rotary incremental forming process is performed at a rotary-incremental-forming-process average equivalent strain rate that ranges from 1 s⁻¹ to 100 s⁻¹.
Clause 75. The method according to any one of Clauses 1 to 74, further comprising a step of annealing the preform after the rotary incremental forming process.
Clause 76. The wrought metallic article, manufactured according to the method of any one of Clauses 1 to 75.

Different examples of the apparatus(es) and method(s) disclosed herein include a variety of components, features, and functionalities. It should be understood that the various examples of the apparatus(es) and method(s), disclosed herein, may include any of the components, features, and functionalities of any of the other examples of the apparatus(es) and method(s) disclosed herein in any combination.

Many modifications of examples, set forth herein, will come to mind of one skilled in the art, having the benefit of the teachings presented in the foregoing descriptions and the associated drawings.

Therefore, it is to be understood that the subject matter disclosed herein is not to be limited to the specific examples illustrated and that modifications and other examples are intended to be included within the scope of the appended claims. Moreover, although the foregoing description and the associated drawings describe examples of the subject matter, disclosed herein, in the context of certain illustrative combinations of elements and/or functions, it should be appreciated that different combinations of elements and/or functions may be provided by alternative implementations without departing from the scope of the appended claims. Accordingly, parenthetical reference numerals in the appended claims are presented for illustrative purposes only and are not intended to limit the scope of the claimed subject matter to the specific examples provided herein.

## Claims

1. A method (100) for manufacturing a wrought metallic article from a metallic-powder composition, the method comprising steps of:
consolidating the metallic-powder composition (110) to yield a consolidated preform having a cross-sectional area and a relative density of less than 100 percent;
reducing the cross-sectional area of the consolidated preform via at least one forming pass of one of a cogging process and a rotary incremental forming process (120), thereby yielding an intermediate preform; and
reducing the cross-sectional area of the intermediate preform via at least one forming pass of another of the cogging process and the rotary incremental forming process (130).

2. The method (100) according to Claim 1, wherein the step of consolidating the metallic-powder composition (110) comprises pressing of the metallic-powder composition, and/or wherein the step of consolidating the metallic-powder composition (110) comprises a step of sintering the metallic-powder composition.

3. The method (100) according to Claim 1 or Claim 2, wherein, following the step of consolidating the metallic-powder composition, the relative density of the consolidated preform is at most 99 percent.

4. The method (100) according to any preceding Claim, wherein the step of reducing the cross-sectional area of the consolidated preform via at least one forming pass of a cogging process comprises:
reducing the cross-sectional area of the consolidated preform via an initial forming pass of a cogging process so that the consolidated preform has a decreased cross-sectional area; and
reducing the decreased cross-sectional area of the consolidated preform via a subsequent forming pass of the cogging process by a greater percentage than that, by which the cross-sectional area of the consolidated preform was reduced during the initial forming pass.

5. The method (100) according to Claim 4, wherein the initial forming pass of the cogging process reduces the cross-sectional area of the consolidated preform by at most 2 percent, and/or wherein an amount, by which the initial forming pass of the cogging process reduces the cross-sectional area of the consolidated preform, is sufficient to close centerline porosity of the consolidated preform without damaging the preform.

6. The method (100) according to Claim 5, wherein the subsequent forming pass of the cogging process reduces the decreased cross-sectional area of the consolidated preform by at least 2 percent, and/or wherein:
the subsequent forming pass of the cogging process reduces the decreased cross-sectional area of the consolidated preform by at least 3 percent so that the consolidated preform has a further-decreased cross-sectional area, and
a second subsequent forming pass of the cogging process reduces the further-decreased cross-sectional area of the consolidated preform by at least 6 percent.

7. The method (100) according to any preceding Claim, wherein:
the cogging process is performed at a cogging-process temperature (in degrees Kelvin), and
the cogging-process temperature is at most 95 percent of a melting temperature (in degrees Kelvin) of the metallic-powder composition.

8. The method (100) according to any preceding Claim, wherein the step of reducing the cross-sectional area of the consolidated preform via the at least one forming pass of a cogging process is performed at a cogging-process average equivalent strain rate that ranges from 0.00001 s⁻¹ to 100 s⁻¹.

9. The method (100) according to any preceding Claim, further comprising a step of annealing the cogged preform prior to the reducing the cross-sectional area of the cogged preform via at least one forming pass of the rotary incremental forming process.

10. The method (100) according to any preceding Claim, wherein the step of reducing the cross-sectional area of the intermediate preform via at least one forming pass of a rotary incremental forming process comprises:
reducing the cross-sectional area of the intermediate preform via an initial forming pass of a rotary incremental forming process so that the intermediate preform has a decreased cross-sectional area; and
reducing the decreased cross-sectional area of the intermediate preform via a subsequent forming pass of the rotary incremental forming process by a greater percentage than that, by which the cross-sectional area of the intermediate preform was reduced during the initial forming pass; and optionally, wherein:
the initial forming pass of the rotary incremental forming process reduces the cross-sectional area of the intermediate preform by at most 2 percent, and/or wherein:
an amount, by which the initial forming pass of the rotary incremental forming process reduces the cross-sectional area of the intermediate preform, is sufficient to close surface porosity of the intermediate preform without damaging the preform.

11. The method (100) according to Claim 10, wherein the subsequent forming pass of the rotary incremental forming process reduces the decreased cross-sectional area of the intermediate preform by at least 2 percent.

12. The method (100) according to any preceding Claim, wherein:
the rotary incremental forming process is performed at a rotary-incremental-forming-process temperature (in degrees Kelvin), and
the rotary-incremental-forming-process temperature is at most 95 percent of a melting temperature (in degrees Kelvin) of the metallic-powder composition.

13. The method (100) according to any preceding Claim, wherein the step of reducing the cross-sectional area of the intermediate preform via the at least one forming pass of a rotary incremental forming process is performed at a rotary-incremental-forming-process average equivalent strain rate that ranges from 0.00001 s⁻¹ to 100 s⁻¹.

14. The method (100) according to any preceding Claim, further comprising a step of annealing the preform after the rotary incremental forming process.

15. A wrought metallic article manufactured according to a method as defined in any of Claims 1 to 14.
